# EUROPEAN PATENT APPLICATION

(11) **EP 4 676 018 A1**
(43) Date of publication of application: **07.01.2026**
(21) Application number: 25182544.4
(22) Date of filing: 13.06.2025
(51) Int. Cl.: H04N 1/028

(54) **ILLUMINATION DEVICE, IMAGE READING DEVICE, IMAGE FORMING APPARATUS, INSPECTION DEVICE, AND ILLUMINATION METHOD**

(30) Priority: 02.07.2024 JP 2024106793
(71) Applicant: Ricoh Company, Ltd., Tokyo 143-8555 (JP)
(72) Inventor: NAMBARA, Kohsuke, Kanagawa, 220-0011 (JP); SUGAI, Atsushi, Kanagawa, 220-0011 (JP)
(74) Representative: SSM Sandmair

(57) **Abstract**

An illumination device (13) includes a first light source (1311) and a second light source (1312). The first light source (1311) irradiates an irradiation region (221) with a first light in a first direction. The second light source (1312) is disposed opposite to the first light source (1311) to irradiate the irradiation region (221) with a second light in a second direction. The first light is overlapped with the second light in the irradiation region (221). The first light has a wavelength different from the second light.

## Description

### BACKGROUND

### Technical Field

The present disclosure relates to an illumination device, an image reading device, an image forming apparatus, an inspection device, and an illumination method.

### Related Art

In an illumination device in an image reading apparatus, a technique is known that a plurality of light emitting diodes (LEDs) are arranged in an array to obtain a light amount. A technique is also known that two types of LEDs are alternately mounted on the same substrate to irradiate light having a plurality of wavelengths.

In the illumination device of the image reading apparatus, a configuration is proposed that a plurality of types of LEDs are arranged in two rows in an array to obtain a light amount, and a shape of an emission surface of a light guide is curved to change an emission angle of light emitted from the light guide to uniformly irradiate a reading target with light (see, for example, Japanese Unexamined Patent Application Publication No. 2013-081074).

However, according to the above-described techniques, there may be a disadvantage that the irradiation directions of the two rows of LED arrays are inclined with respect to the reading target, which lessens the irradiation efficiency to the reading target. Further, according to the above-described techniques, there may be a disadvantage that the light guide needs to be subjected to complicated processing, which increases the manufacturing cost.

### SUMMARY

The present disclosure has been proposed in view of the above-described disadvantages, and an object of the present disclosure is to efficiently irradiate a reading target with light having wavelengths different from each other without performing complicated processing on the light guide.

The present disclosure described herein provides an illumination device that includes a first light source and a second light source. The first light source irradiates an irradiation region with a first light in a first direction. The second light source is disposed opposite to the first light source to irradiate the irradiation region with a second light in a second direction. The first light is overlapped with the second light in the irradiation region. The first light has a wavelength different from the second light.

The present disclosure described herein also provides an image reading device that includes the illumination device and a sensor. The sensor reads reflected light of the first light and the second light emitted from the first light source and the second light source, respectively, and reflected from the irradiation region.

The present disclosure described herein further provides an image forming apparatus that includes the image reading device.

The present disclosure described herein further provides an inspection device that includes the illumination device and a conveyor. The conveyor conveys an inspection target. The first light source and the second light source irradiate the inspection target conveyed by the conveyor with the first light and the second light, respectively, at the irradiation region.

The present disclosure described herein further provides an illumination method that includes irradiating an irradiation region with a first light in a first direction by a first light source and irradiating the irradiation region with a second light in a second direction by a second light source. The first light is overlapped with the second light in the irradiation region. The first light has a wavelength different from the second light.

According to one aspect of the present disclosure, it is possible to efficiently irradiate the reading target with light having different wavelengths without performing complicated processing on the light guide.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a side view illustrating an outline of an image reading apparatus including an illumination device according to a first embodiment;
FIG. 2 is a diagram illustrating a configuration of the illumination device according to the first embodiment;
FIGS. 3A and 3B are diagrams illustrating arrangement positions of light sources according to the first embodiment;
FIGS. 4A and 4B are diagrams illustrating an effect of the configuration of the illumination device according to the first embodiment;
FIGS. 5A and 5B are diagrams illustrating another effect of the configuration of the illumination device according to the first embodiment;
FIGS. 6A and 6B are diagrams illustrating a reading state in a case where one type of light emitting elements is disposed in one light source and the other type of light emitting elements is disposed in the other light source;
FIGS. 7A and 7B are diagrams illustrating a reading state in a case where two types of light emitting elements are alternately arranged in an array in each light source;
FIG. 8 is a diagram illustrating a common light source unit and an example of an illumination device;
FIG. 9 is a diagram illustrating another configuration of the illumination device according to the first embodiment;
FIG. 10 is a diagram illustrating a configuration of an illumination device according to a second embodiment;
FIGS. 11A and 11B are diagrams illustrating the arrangement positions of light sources in the second embodiment;
FIGS. 12A, 12B, and 12C are diagrams illustrating an effect of the configuration of the illumination device according to the second embodiment;
FIGS. 13A and 13B are diagrams illustrating an effect of reading in an image reading apparatus according to the second embodiment;
FIGS. 14A and 14B are diagrams illustrating another effect of reading in the image reading device according to the second embodiment;
FIG. 15 is a diagram illustrating a configuration of an illumination device according to a third embodiment;
FIGS. 16A and 16B are diagrams illustrating an effect of the configuration of the illumination device according to the third embodiment;
FIG. 17 is a cross-sectional view of a mechanical section of an image forming apparatus according to a fourth embodiment; and
FIG. 18 is a diagram illustrating an illumination device included in an inspection device according to a fifth embodiment.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. Like reference signs are assigned to like elements or components and descriptions of those elements or components may be simplified or omitted. As used herein, the singular forms "a," "an," and "the" are intended to include the plural forms as well, unless the context clearly indicates otherwise.

With reference to the accompanying drawings, a description is given below of embodiments of an illumination device, an image reading device, an image forming apparatus, an inspection device, and an illumination method in detail.

### First Embodiment

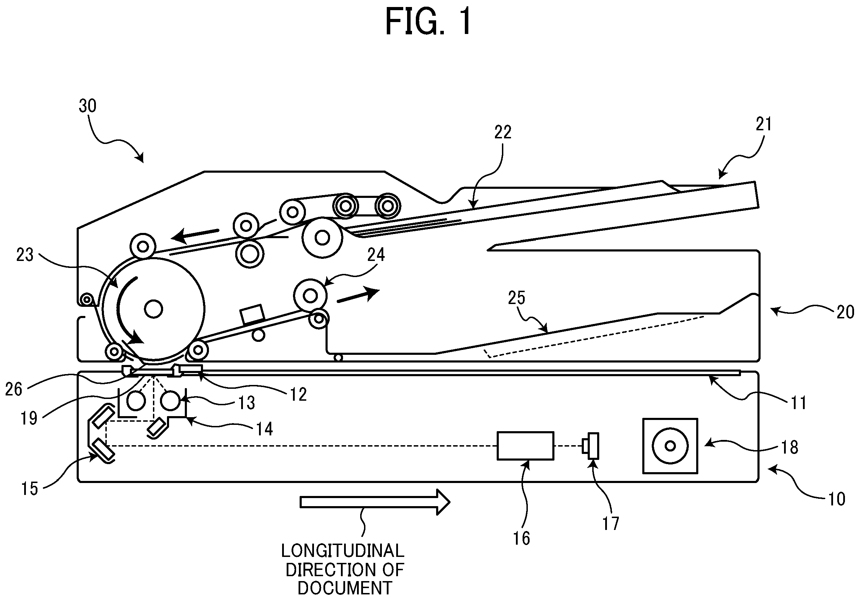

FIG. 1 is a side view of an image reading device 30 including an illumination device 13 according to the present embodiment. The image reading device 30 is, for example, a sheet-through type, and includes a reader 10 (e.g., a flatbed scanner) and an automatic document feeder (ADF) 20.

The reader 10 includes an exposure glass 11, a reference white plate 12, an illumination device 13, a first carriage 14, a second carriage 15, a lens 16, a sensor board 17, a scanner motor 18, and a reading window 19. The sensor board 17 includes a line sensor such as a charge coupled device (CCD) or a complementary metal oxide semiconductor (CMOS).

The ADF 20 is disposed above the reader 10, and automatically feeds and automatically conveys documents 22. The ADF 20 includes a document tray 21, a conveying drum 23, an output roller 24, an output tray 25, and a background portion 26. The background portion 26 also serves to press the document 22 when the document 22 being conveyed is read. The documents 22 are conveyed one by one by the ADF 20, and exposed by the illumination device 13 when the documents 22 have passed through the reading position of the reading window 19. The reflected light of the exposed document 22 is turned back by the mirrors of the first carriage 14 and the second carriage 15, and passes through the lens 16 to form a reduced image on the light receiving surface of the line sensor of the sensor board 17.

In flatbed reading in which the document 22 is fixed on the exposure glass 11 and read by scanning the first carriage 14 and the second carriage 15, the document 22 placed on the upper surface of the exposure glass 11 is exposed by the illumination device 13 disposed below the exposure glass 11. The reflected light from the document 22 is turned back by the mirrors of the first carriage 14 and the second carriage 15, and passes through the lens 16 to form a reduced image on the light receiving surface of the line sensor of the sensor board 17. At this time, the first carriage 14 moves at a speed V along the longitudinal direction of the document 22, and at the same time, the second carriage 15 moves at a speed V/2, which is half the speed of the first carriage 14, in conjunction with the first carriage 14, and reads the entire document 22 in the longitudinal direction.

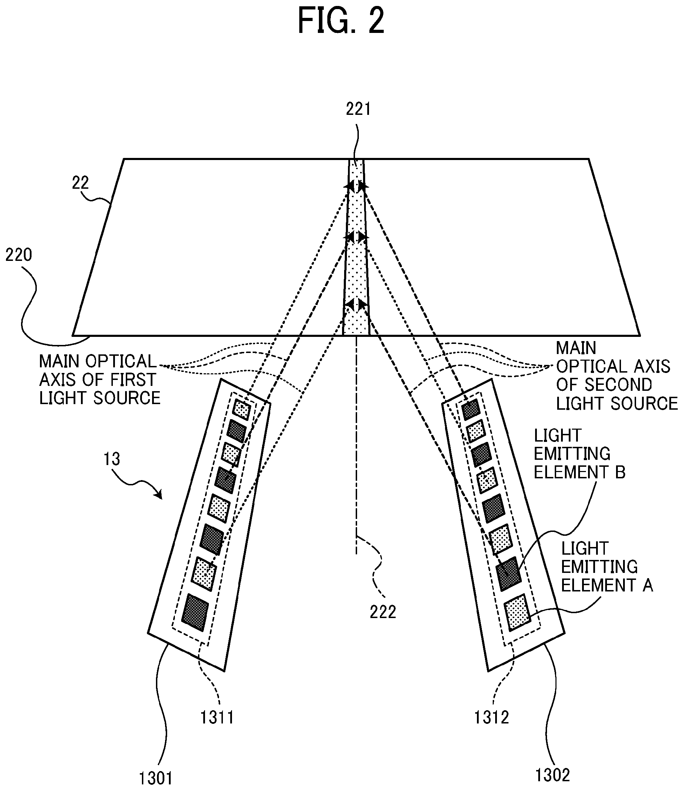

FIG. 2 is a diagram illustrating a configuration of the illumination device 13 according to the present embodiment. The illumination device 13 includes a pair of light source units, that is, a first light source unit 1301 and a second light source unit 1302, including a first light source 1311 and a second light source 1312, respectively, for irradiating an irradiated surface 220 of the document 22 with light. The first light source 1311 is disposed in the longitudinal direction of the first light source unit 1301, and the second light source 1312 is disposed in the longitudinal direction of the second light source unit 1302. In the following description, each of the first light source unit 1301 and the second light source unit 1302 may be referred to as a light source unit, and each of the first light source 1311 and the second light source 1312 may be referred to as a light source.

An irradiated region 221 is a target region to be irradiated with light by each light source of the illumination device 13. The irradiated region 221 corresponds to an image reading line (a line of a reading position) when the image reading device 30 reads an image using the line sensor. A longitudinal direction of the irradiated region 221 is a main scanning direction of image reading. FIG. 2 is a view of the first light source unit 1301, the second light source unit 1302, and the document 22 as viewed obliquely from above. The surface of the first light source unit 1301 on which the first light source 1311 is mounted, the surface of the second light source unit 1302 on which the second light source 1312 is mounted, and the surface of the document 22 on the back side of the reading surface are visible in FIG. 2. The irradiated surface 220 is located on the lower surface of the document 22. However, the position of the irradiated region 221 is not limited to the lower surface of the document 22. For example, the irradiated region may have a width in an up-and-down direction from the upper side to the lower side of the document 22.

The first light source unit 1301 and the second light source unit 1302 are opposed to each other with a perpendicular line 222 to a surface of the irradiated region 221 interposed therebetween. The surface of the irradiated region 221 is a surface parallel to the irradiated surface 220 in the irradiated region 221. This surface may be any of the irradiated surface 220 in the irradiated region 221, a surface positioned above the irradiated surface 220 parallel to the irradiated surface 220 in the irradiated region 221, and a surface positioned below the irradiated surface 220 parallel to the irradiated surface 220 in the irradiated region 221. The perpendicular line 222 extends from each position in the longitudinal direction (image reading line) of the irradiated region 221. Main optical axes of the light of the first light source 1311 and the light of the second light source 1312 irradiated from the positions opposed to each other with a certain perpendicular line 222 interposed therebetween are directed to the irradiated region 221. In other words, the first light source 1311 and the second light source 1312 are disposed such that the main optical axes of the light emitted from the positions opposed to each other with the perpendicular line 222 interposed therebetween intersect with each other in the irradiated region 221. The main optical axis is an optical center axis of each of the first light source 1311 and the second light source 1312, and is a radiation direction in which the luminous intensity of the light emitted by each of the first light source 1311 and the second light source 1312 is maximized. The positions opposed to each other with the perpendicular line 222 interposed therebetween are a first position in the first light source 1311 and a second position closest to the first position in the second light source 1312, and a straight line connecting the first position and the second position is orthogonal to the perpendicular line 222.

Each of the first light source 1311 and the second light source 1312 includes a light emitting element A and a light emitting element B that emit light of different wavelengths. Light emitted from the positions at which the first light source 1311 and the second light source 1312 opposed to each other with the perpendicular line 222 interposed therebetween have different wavelengths. FIG. 2 illustrates an example in which the light emitting elements A and the light emitting elements B as point light sources are alternately arranged in an array in each of the first light source 1311 and the second light source 1312. Each of the first light source 1311 and the second light source 1312 may be any light source as long as the light source satisfies the following conditions (1) and (2). (1) The main optical axes of light emitted from positions opposed to each other with the perpendicular line 222 interposed therebetween intersect with each other in the irradiated region 221. In other words, the irradiated region 221 has a region where the light emitted from the first light source 1311 in the direction of the main optical axis and the light emitted from the second light source 1312 in the direction of the main optical axis overlap with each other. (2) The wavelength of the light emitted from the positions opposed to each other across the perpendicular line 222 are different from each other. In other words, the light emitted from the first light source 1311 to the overlapping region and the light emitted from the second light source 1312 to the overlapping region have different wavelengths.

In FIG. 2, the light emitting element A of the first light source 1311 and the light emitting element B of the second light source 1312 are disposed at positions opposed to each other with the perpendicular line 222 interposed therebetween. The main optical axes of the light emitting element A of the first light source 1311 and the light emitting element B of the second light source 1312 intersect each other in the irradiated region 221, and thus the condition (1) is satisfied. The light emitting element A and the light emitting element B emit light having different wavelengths to satisfy the condition (2). As described below, the light emitting element A and the light emitting element B may be mounted on each of the first light source 1311 and the second light source 1312, or may be mounted at positions away from each of the first light source 1311 and the second light source 1312 to emit light from the position of each of the first light source 1311 and the second light source 1312 using, for example, a light guide as in a light-guide system. The positions of the first light source 1311 and the second light source 1312 opposed to each other with the perpendicular line 222 interposed therebetween may be positions at equal distances from the perpendicular line 222. In this case, the main optical axes of the light emitted from the respective positions form the same angle with respect to a plane parallel to the irradiated surface 220 in the irradiated region 221.

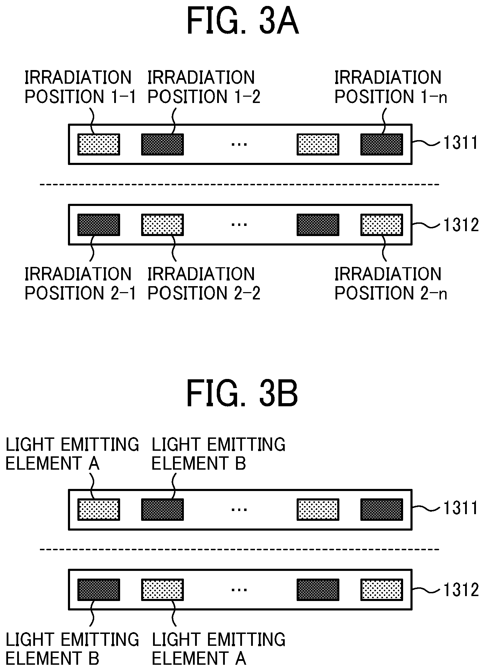

FIGS. 3A and 3B are diagrams illustrating arrangement positions of the first light source 1311 and the second light source 1312 in the present embodiment. FIGS. 3A and 3B are views of the first light source 1311 and the second light source 1312 as viewed from the irradiated region 221. A dotted line between the first light source 1311 and the second light source 1312 in FIGS. 3A and 3B indicates a center line of the irradiated region 221 in the main scanning direction. A foot of a perpendicular line 222 extending from each main scanning position (each position of the image reading line) is positioned on the dotted line. The wavelength of the light emitted from the light source indicated by light dots is different from the wavelength of the light emitted from the light source indicated by dark dots.

Irradiation positions 1-1, 1-2, ..., 1-n (n is a natural number) in FIG. 3A indicate positions irradiated with light from the first light source 1311. Irradiation positions 2-1, 2-2, ..., 2-n indicate positions irradiated with light from the second light source 1312. The irradiation position 1-m (m = 1, 2, ..., n) and the irradiation position 2-m are positions opposed to each other with the perpendicular line 222 interposed therebetween. A straight line connecting the irradiation position 1-m and the irradiation position 2-m is orthogonal to the perpendicular line 222. In this example, the light emitting element may be mounted at each irradiation position, or the light emitting element may be mounted at a position away from each of the first light source 1311 and the second light source 1312 to irradiate light from each irradiation position using the light guide.

FIG. 3B illustrates an example in which two types of light emitting elements (i.e., the light emitting element A and the light emitting element B) are alternately arranged in an array at the irradiation positions of FIG. 3A, and is the same example as the first light source 1311 and the second light source 1312 illustrated in FIG. 2. According to such a configuration, the light guide is not necessary and the adjustment of a light-guide position of the light guide is not necessary. Thus, the effect of the present embodiment can be obtained without increasing the processing cost of the light guide and the number of mounting steps. In both FIGS. 3A and 3B, the first light source 1311 and the second light source 1312 are arranged such that the optical axes of light emitted from positions opposed to each other with the perpendicular line 222 interposed therebetween intersect with each other in the irradiated region 221.

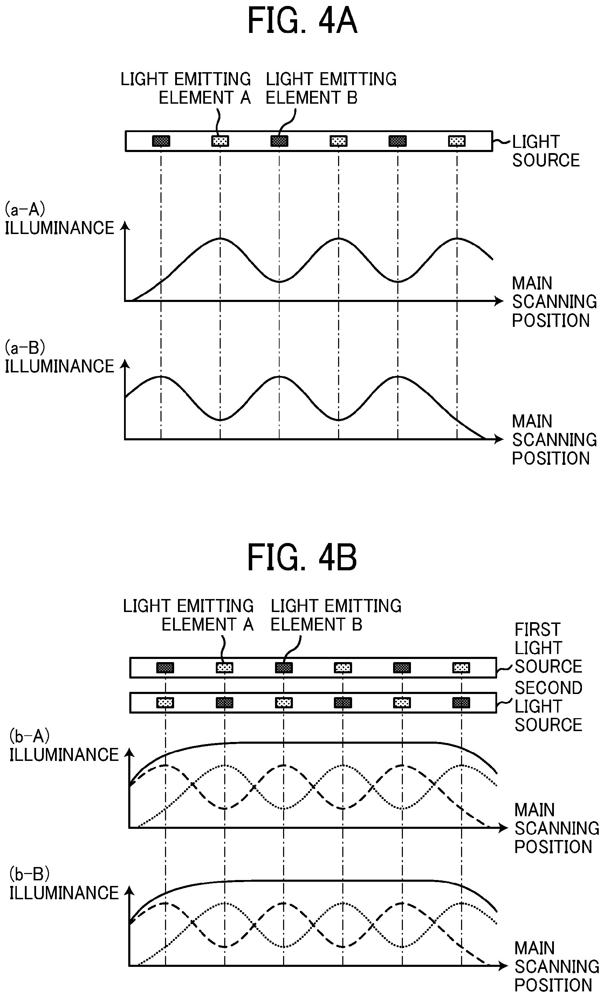

FIGS. 4A and 4B are diagrams illustrating the effect of the configuration of the present embodiment. FIG. 4A illustrates the configuration and illuminance distribution of a light source in a comparative example. FIG. 4B illustrates the configuration of light sources and illuminance distributions of light emitting elements according to the present embodiment. The solid line of the graph indicates the illuminance distribution by the light emitting elements A (or B) in the irradiated region 221 (the image reading line in the case of using the line sensor). The vertical axis of the graph indicates the illuminance and the horizontal axis indicates the main scanning position (the coordinate in the main scanning direction on the image reading line). In FIG. 4A, a graph (a-A) illustrates an illuminance distribution by the light emitting elements A of the light source in a comparative example. A graph (a-B) illustrates an illuminance distribution by the light emitting elements B of the light source in the comparative example. In FIG. 4B, a graph (b-A) illustrates an illuminance distribution by the light emitting elements A of the light sources according to the present embodiment. A graph (b-B) illustrates an illuminance distribution by the light emitting elements B of the light sources according to the present embodiment. Dotted lines in graphs (b-A) and (b-B) indicate contributions of the first light source 1311 to the illuminance distributions. Dashed lines in the graphs (b-A) and (b-B) indicate contributions of the second light source 1312 to the illuminance distributions.

The light source in the comparative example can emit light only from one of the two types of light emitting elements at an end of the main scanning position (the left end or the right end of the graph of the illuminance distribution). The illuminance of one light emitting element peaks at a main scanning position corresponding to the main optical axis of the light emitting element and decreases the further away from the position. As illustrated in FIG. 4A, the illuminance of the light emitting elements decreases at the ends of the main scanning position. The light emitting elements are arranged at certain pitch intervals, so that the flatness of the illuminance distribution of the light emitting elements may not be maintained.

On the other hand, as illustrated in FIG. 4B, in the light source according to the present embodiment, the light emitting element A and the light emitting element B are arranged to emit light of mutually different wavelengths from positions opposed to each other with the perpendicular line 222 interposed therebetween. The light emitted from the light emitting element A (or B) of one of the first light source 1311 and the second light source 1312 overlaps, in the irradiated region 221, with the light emitted from the light emitting element B (or A) of the other. The illuminance distribution of the light becomes as illustrated in the graph of the solid line in FIG. 4B. As described above, in the present embodiment, even at the ends of the main scanning position, the light from the light emitting element A (or B) of the first light source 1311 and the light from the light emitting element B (or A) of the second light source 1312 are emitted. Thus, a disadvantage that the illuminance of the light emitting elements is decreased is alleviated. In the present embodiment, at a position opposite a gap between the light emitting elements A (or B), the same type of light emitting element A (or B) is disposed. Thus, a disadvantage that the flatness may not be obtained due to the pitch intervals between the light emitting elements.

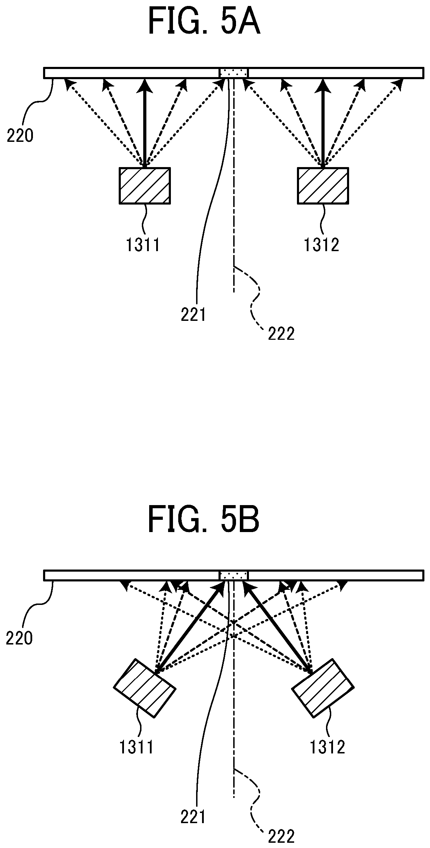

FIGS. 5A and 5B are diagrams illustrating another effect of the configuration according to the present embodiment. FIG. 5A illustrates the relation between a light source and the irradiated surface 220 in a comparative example. FIG. 5B illustrates the relation between a light source and the irradiated surface 220 according to the present embodiment. In this example, each of the light sources includes a first light source 1311 and a second light source 1312. Arrows indicate light emitted from positions opposed to each other with the perpendicular line 222 interposed therebetween. The solid arrow indicates the light in the main optical axis direction, and the dotted arrow and the dashed arrow indicate the light in directions different from the main optical axis direction. The intensity of the irradiated light is the highest in the main optical axis direction, is lower in the direction indicated by the dotted line, and is the lowest in the direction indicated by the dashed line.

In the light source in the comparative example, as illustrated in FIG. 5A, the main optical axes of the first light source 1311 and the second light source 1312 are perpendicular to the irradiated surface 220, so that the irradiated region 221 is irradiated with attenuated light. On the other hand, in the present embodiment, as illustrated in FIG. 5B, the main optical axes of the first light source 1311 and the second light source 1312 intersect with each other in the irradiated region 221, so that the light having the maximum intensity is irradiated to the irradiated region 221. Thus, it is found that the irradiation efficiency is good.

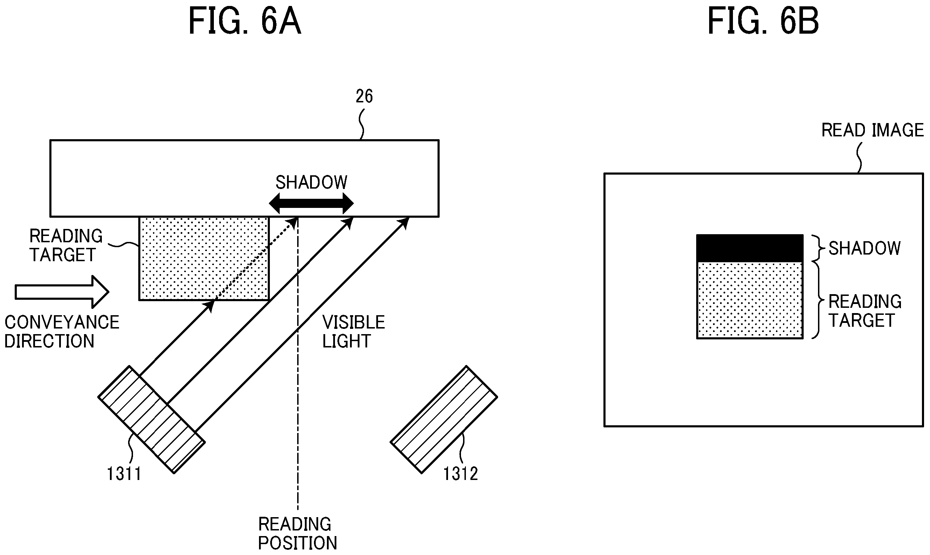

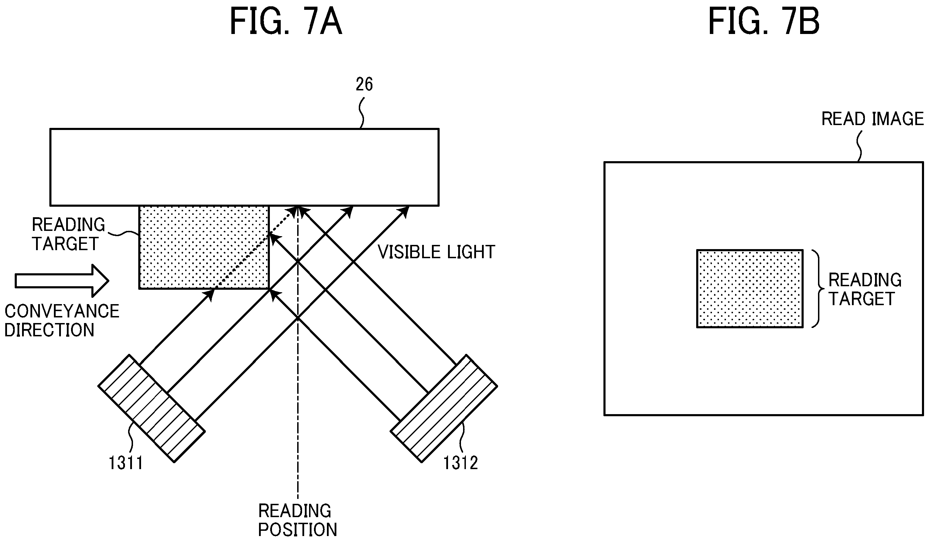

A description is given below of the effect of the case where two types of light emitting elements that emit light having different wavelengths are alternately arranged in an array in each of the light sources with reference to FIGS. 6A, 6B, 7A, and 7B. Such an arrangement of the light emitting elements corresponds to the examples illustrated in FIG. 2 and FIG. 3B.

FIGS. 6A and 6B are diagrams illustrating a reading state in a case where the two types of light emitting elements are arranged so that one type is disposed in one light source and the other type is disposed in the other light source. In this example, it is assumed that the two types of light emitting elements are the light emitting element A that emits visible light and the light emitting element B that emits invisible light. Only the light emitting element A is disposed in the first light source 1311, and only the light emitting element B is disposed in the second light source 1312. FIG. 6A is a diagram illustrating an optical path of the visible light and a reading target at a timing when the reading target such as the document 22 is conveyed in the image reading device 30 and the leading end of the reading target approaches the reading position of the background portion 26. FIG. 6B illustrates a read image obtained by reading the reading target with a visible light sensor. In such a configuration, the light emitting element A that emits visible light is mounted only on the first light source 1311. Thus, a disadvantage that a portion where visible light is blocked (a shadow of visible light) is generated at the downstream end of the reading target in the conveyance direction may occur as illustrated in FIGS. 6A and 6B. In the case of reading by the invisible light sensor, there is a disadvantage that a portion where invisible light is blocked (a shadow of the invisible light) is generated at the upstream end of the reading target in the conveyance direction, which is opposite to the above.

FIGS. 7A and 7B are diagrams illustrating a reading state in the case where two types of light emitting elements are alternately arranged in an array in each of the light sources. As in the example of FIGS. 6A and 6B, the two types of light emitting elements are light emitting elements A that emit visible light and light emitting elements B that emit invisible light. The light emitting elements A and the light emitting elements B are alternately arranged in an array in each of the first light source 1311 and the second light source 1312. **In** such a configuration, the light emitting elements A that emit visible light are mounted on the first light source 1311 and the second light source 1312. Thus, a shadow of visible light is not generated at the downstream end of the reading target in the conveyance direction as illustrated in FIGS. 7A and 7B. Similarly, the light emitting elements B that emit invisible light are mounted on the first light source 1311 and the second light source 1312. Thus, a shadow of the invisible light is not also generated at the upstream end of the reading target in the conveyance direction.

In this way, two types of light emitting elements (the light emitting element A and the light emitting element B) that emit light of different wavelengths are alternately arranged in an array in each of the light sources, so that the light having one of the different wavelengths is not emitted from only one light source. Thus, the occurrence of a portion where the light having one of the different wavelengths is blocked (a shadow of the light having one of the different wavelengths) is prevented.

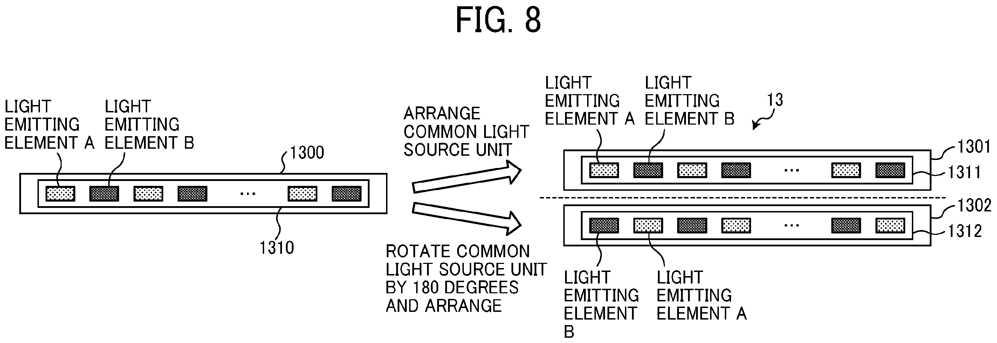

A description is given below of an example of implementing the illumination device 13 by using a common light source unit for the first light source unit 1301 and the second light source unit 1302. FIG. 8 is a diagram illustrating the common light source unit and the illumination device 13. As illustrated in FIG. 8, a light source unit 1300 has a light source 1310 in which the light emitting elements A and the light emitting elements B are alternately arranged in an array. The light source unit 1300, which is a common light source unit, is disposed in each of the first light source unit 1301 and the second light source unit 1302, which compose the illumination device 13. The arrangement of the light source unit 1300 in the second light source unit 1302 is obtained by rotating the arrangement of the light source unit 1300 in the first light source unit 1301 by 180 degrees.

The illumination device 13 is implemented by using a common light source in the present embodiment. In other words, in the illumination device 13 illustrated in FIG. 8, the light source 1310, which is a common light source, is used for the first light source 1311 included in the first light source unit 1301 and the second light source 1312 included in the second light source unit 1302. The arrangement of the light source 1310 in the second light source 1312 is obtained by rotating the arrangement of the light source 1310 in the first light source 1311 by 180 degrees.

In this way, the above-described conditions (1) and (2) can be implemented by using a common light source unit (or a common light source). As a result, the first light source unit 1301 (or the first light source 1311) and the second light source unit 1302 (or the second light source 1312) can be composed with the same parts. Thus, the parts may not be separately manufactured, and the management cost and the parts costs can be reduced.

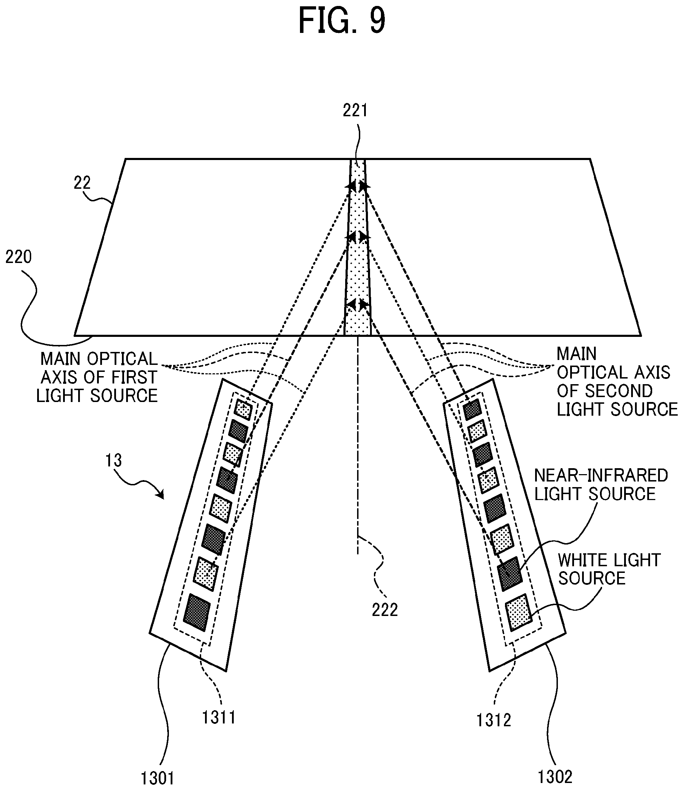

FIG. 9 is a diagram illustrating another example of the configuration of the illumination device 13 according to the present embodiment. In the illumination device 13 of the present embodiment, as illustrated in FIG. 9, one of the two types of light emitting elements (the light emitting element A and the light emitting element B) can be used as a white light source, and the other light emitting element can be used as a near-infrared light source. In this example, in the arrangement of FIG. 3B, the illumination device 13 includes a white light source as the light emitting element A and a near-infrared light source as the light emitting element B. Thus, the effect illustrated in FIG. 3B is obtained. As illustrated in FIG. 9, such a configuration can provide the illumination device 13 that is unlikely to decrease in illuminance distribution at the ends, has good flatness of illuminance distribution and good irradiation efficiency in the irradiated region, and emits white light and near-infrared light.

As described above, in the present embodiment, the illumination device 13 includes the two light sources (the first light source 1311 and the second light source 1312) to satisfy the above-described conditions (1) and (2). Thus, the illumination device 13 efficiently irradiates the reading target with light having different wavelengths without performing complicated processing on the light guide.

### Second embodiment

In a second embodiment, each of the first light source 1311 and the second light source 1312 includes only one of the light emitting element A and the light emitting element B. In the following description of the second embodiment, descriptions that overlap with those in the first embodiment are omitted, and different descriptions from the first embodiment are described.

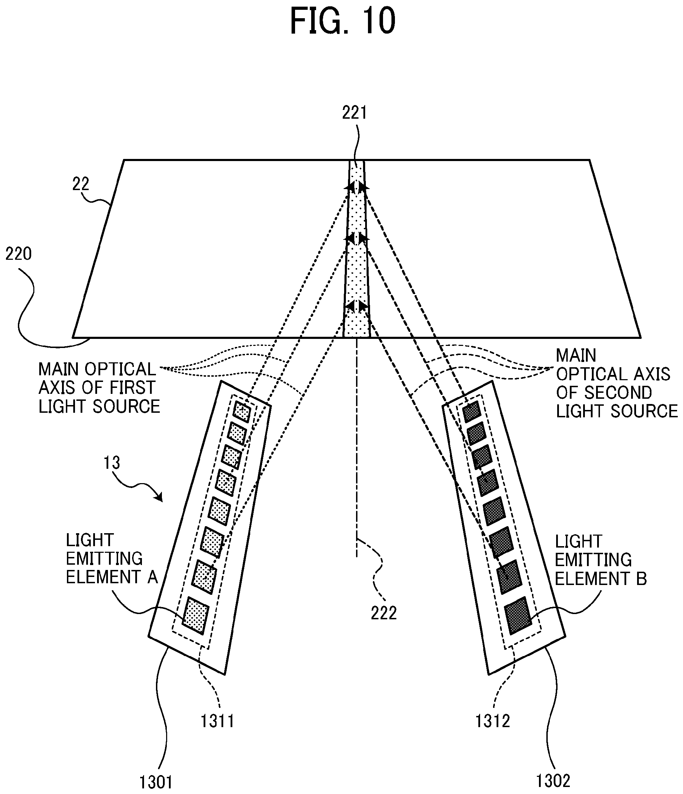

FIG. 10 is a diagram illustrating a configuration of the illumination device 13 according to the present embodiment. The illumination device 13 illustrated in FIG. 10 mounts only one of the light emitting element A and the light emitting element B on each of the light sources (the first light source 1311 and the second light source 1312). FIG. 10 illustrates an example in which the light emitting elements (the light emitting element A and the light emitting element B) in the form of point light sources are arranged in an array in each of the light sources (the first light source 1311 and the second light source 1312). A light emitting surface of the light guide may be arranged at the position of each of the light emitting elements (the light emitting element A and the light emitting element B). The light guided from an end of the light guide may be emitted from the light emitting surface as described later.

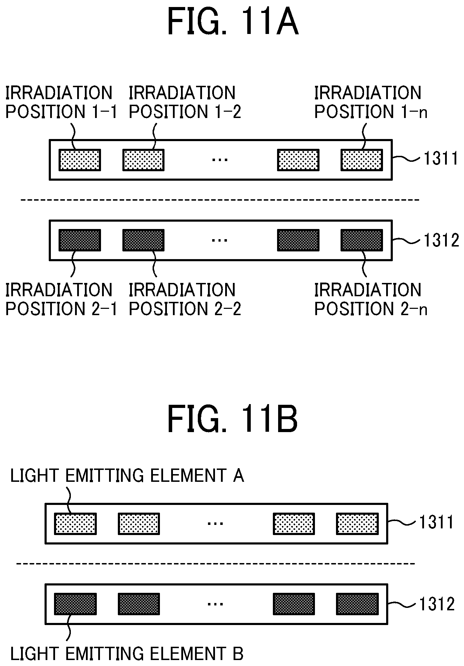

FIGS. 11A and 11B are diagrams illustrating the arrangement positions of the light sources in the present embodiment. FIGS. 3A and 3B are views of the first light source 1311 and the second light source 1312 as viewed from the irradiated region 221. The dotted line between the light sources in each of FIGS. 11A and 11B indicates the center line of the irradiated region 221 in the main scanning direction. The foot of the perpendicular line 222 extending from each main scanning position is positioned on the dotted line. The wavelength of the light emitted from the light source indicated by light dots is different from the wavelength of the light emitted from the light source indicated by dark dots.

Irradiation positions 1-1, 1-2, ..., 1-n (n is a natural number) in FIG. 11A indicate positions irradiated with light from the first light source 1311. Irradiation positions 2-1, 2-2, ..., 2-n indicate positions irradiated with light from the second light source 1312. The irradiation position 1-m (m = 1, 2, ..., n) and the irradiation position 2-m are positions opposed to each other with the perpendicular line 222 interposed therebetween. In this example, the light emitting element may be mounted at each irradiation position, or the light emitting element may be mounted at a position away from each of the first light source 1311 and the second light source 1312 to irradiate light from each irradiation position using the light guide.

FIG. 11B illustrates an example in which the light emitting element A or the light emitting element B is arranged at each irradiation position of FIG. 11A, and is the same example as the first light source 1311 and the second light source 1312 illustrated in FIG. 10. According to such a configuration, the light guide is not necessary and the adjustment of a light-guide position of the light guide is not necessary. Thus, the effect of the present embodiment can be obtained without increasing the processing cost of the light guide and the number of mounting steps. In both FIGS. 11A and 11B, the first light source 1311 and the second light source 1312 are arranged such that the optical axes of light emitted from positions opposed to each other with the perpendicular line 222 interposed therebetween intersect with each other in the irradiated region 221.

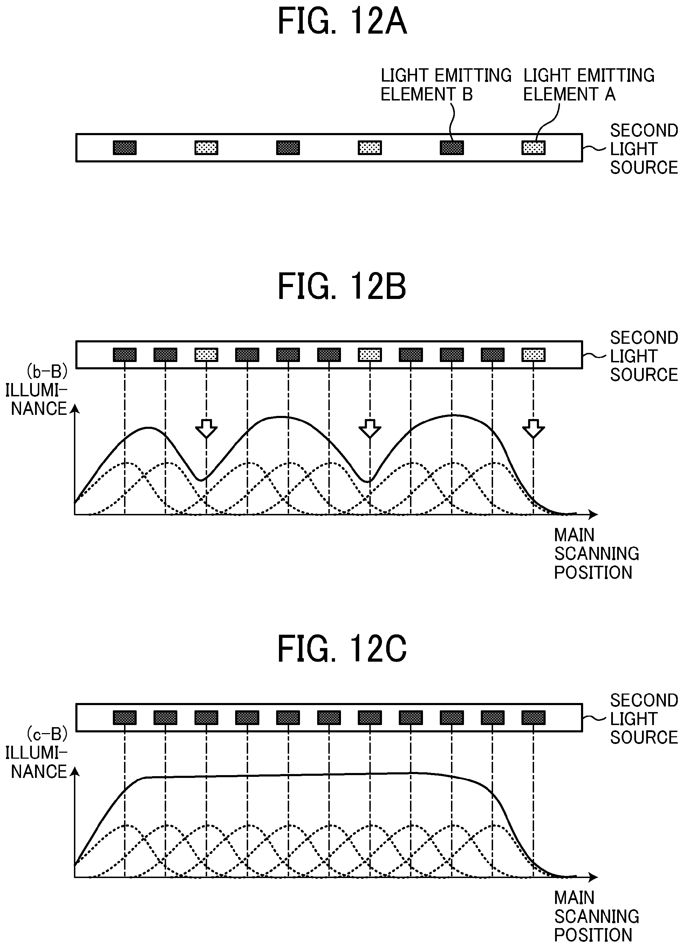

FIGS. 12A, 12B, and 12C are diagrams illustrating the effect of the configuration of the present embodiment. FIG. 12A illustrates an example of a case where the pitch interval of the light emitting elements (the light emitting element A and the light emitting element B) is wide in the second light source 1312 of FIG. 3B. For example, when the light emission intensity of the light emitting element B of the second light source 1312 is weak and the amount of current to the light emitting element B cannot be increased, it is conceivable that the pitch interval of the light emitting elements B is narrowed and the light emitting elements B are densely mounted so that the light emission intensity is strengthened. As illustrated in FIG. 12A, when the light emitting elements B are densely mounted while the same light source (second light source 1312) includes the light emitting elements A and the light emitting elements B, the illuminance distribution of the light emitting elements B is as illustrated in the graph (b-B) of FIG. 12B. The solid line indicates the illuminance distribution of the light emitting elements B, and the dashed line indicates the contribution of each of the light emitting elements B thereto. As described above, even if the light emitting elements B are densely mounted while the light emitting elements A and the light emitting elements B are mixed, the pitch intervals of the light emitting elements B are not equal, and the illuminance reaches valleys at the positions indicated by the arrows in FIG. 12B. Accordingly, the flatness of the illuminance distribution of the light emitting elements B may not be maintained.

On the other hand, in the case of the configuration in which the same light source has only one type of light emitting elements (the light emitting elements A or the light emitting elements B) as illustrated in FIGS. 11A and 11B, the pitch intervals of the light emitting elements B can be set to be equal as illustrated in FIG. 12C even when the light emitting elements (the light emitting elements A or the light emitting elements B) are densely mounted as necessary. Thus, the flatness of the illuminance distribution can be obtained. In the graph (c-B) of FIG. 12C, the solid line indicates the illuminance distribution of the light emitting elements B, and the dashed line indicates the contribution of each of the light emitting elements B thereto. As described above, in the arrangement of FIGS. 11A and 11B, the pitch interval of the light emitting elements can be adjusted according to the light emission intensity while avoiding the disadvantage that the flatness of the illuminance distribution may not be maintained. Thus, the illuminance and the illuminance distribution in the irradiated region 221 can be enhanced.

When the emission intensity of the light emitting elements B is low and the emission intensity of the light emitting elements A is sufficient, the light emitting elements B may be densely mounted, and the arrangement in FIGS. 11A and 11B may be implemented without densely mounting the light emitting elements A. For example, the light emitting surface of the light guide may be disposed at the position of the light emitting element A, and light may be emitted from the light emitting surfaces of the plurality of light guides by one light emitting element A. In this way, the number of mounted light emitting elements (the light emitting elements A or the light emitting elements B) that do not need to be densely mounted is set to an optimal number, so that an increase in cost can be prevented.

In the configuration of FIGS. 11A and 11B, the number of types of light emitting elements mounted on one light source can be limited to one. Thus, the light guide suitable for the optical characteristics of each of the light emitting elements (the light emitting element A and the light emitting element B) can be adopted. In this way, when the light guide according to the characteristics of each type of the light emitting elements (the light emitting element A and the light emitting element B) is adopted, the irradiation efficiency and the illuminance distribution can be further enhanced.

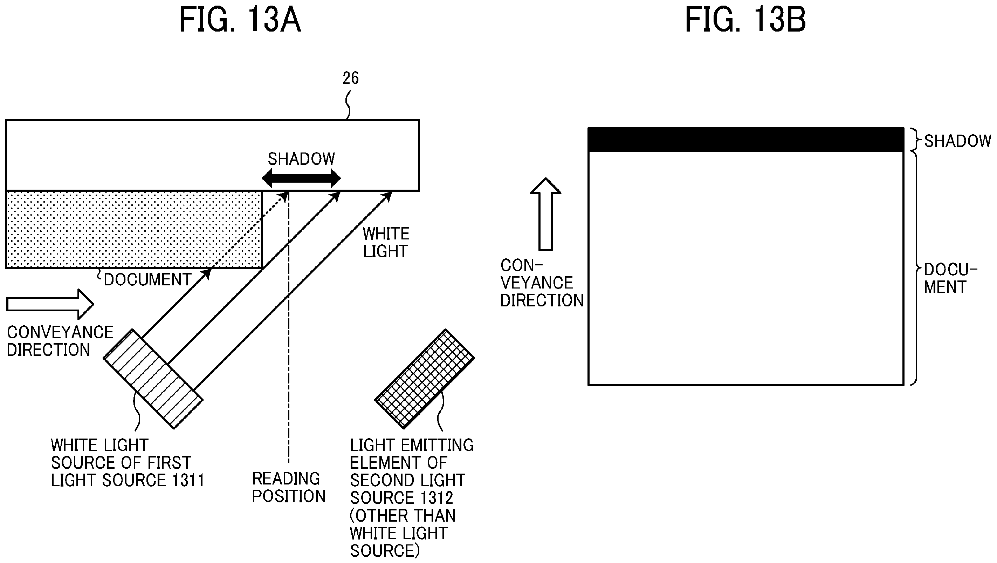

FIGS. 13A and 13B are diagrams illustrating an effect of reading in the image reading device 30 according to the present embodiment. The illumination device 13 used in the image reading device 30 includes a white light source as the light emitting element A of the first light source 1311 and a light emitting element (for example, a near-infrared light source) other than the white light source as the light emitting element B of the second light source 1312. The first light source 1311 is disposed on the upstream side with respect to the second light source 1322 in a conveyance direction in which a sheet-through document (document) is conveyed by the ADF 20.

FIG. 13A is a diagram illustrating the document and the optical path of white light at the timing when the leading end of the document has reached the reading position. Among the light sources, the first light source 1311 including only the white light source is disposed on the upstream side in the conveyance direction. As illustrated in FIG. 13A, a part of the white light is blocked by the leading end of the document, and thus a shadow occurs downstream from the reading position in the conveyance direction. For this reason, in the read image according to the present configuration, as illustrated in FIG. 13B, a shadow is likely to occur at the leading end of the document.

On the other hand, in a technical field for the purpose of skew detection of a read image obtained by reading a document, a method is known that a document leading end is detected by a shadow occurring at the leading end of the document in order to distinguish the document from the background. In the example of FIGS. 13A and 13B, a shadow is likely to occur at the leading end of the document. For this reason, when the image reading device 30 according to the present embodiment adopts a configuration as illustrated in FIG. 13A, the leading end of the document is detected using the shadow of the leading end of the document as illustrated in FIG. 13B. Thus, the accuracy of skew detection can be enhanced.

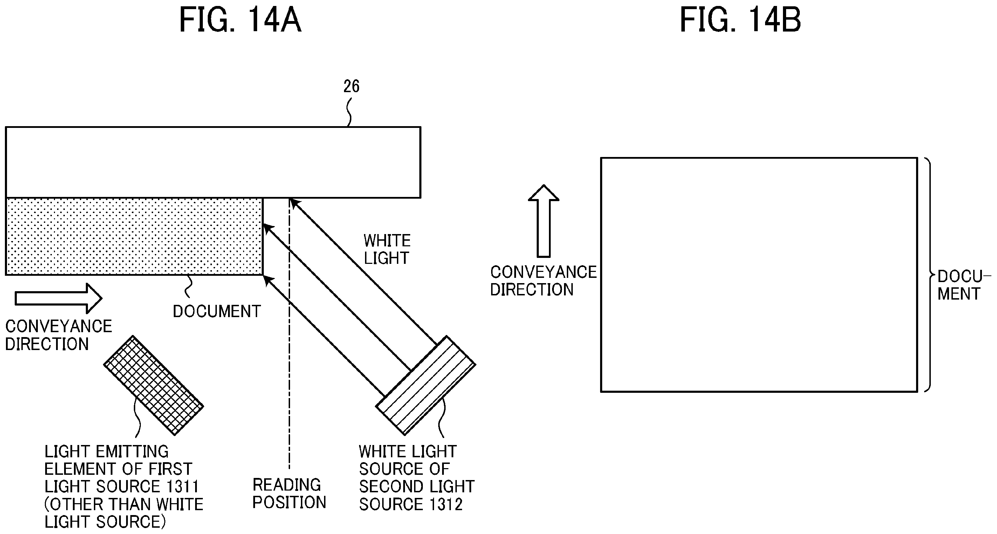

FIGS. 14A and 14B are diagrams illustrating another effect of reading in the image reading device 30 according to the present embodiment. The illumination device 13 used in the image reading device 30 includes a light emitting element (for example, a near-infrared light source) other than a white light source, as the light emitting element A of the first light source 1311, and a white light source as the light emitting element B of the second light source 1312. The first light source 1311 is disposed on the downstream side with respect to the second light source 1312 in the conveyance direction in which the sheet-through document is conveyed by the ADF 20.

FIG. 14A is a diagram illustrating the document and the optical path of white light at the timing when the leading end of the document has reached the reading position. Among the light sources, the second light source 1312 including only the white light source is disposed on the upstream side in the conveyance direction. As illustrated in FIG. 14A, a part of the white light is not blocked by the leading end of the document, and thus no shadow occurs downstream from the reading position. Accordingly, in the read image according to the present configuration, as illustrated in FIG. 14B, no shadow is present even at the leading end of the document. Accordingly, when the image reading device 30 according to the present embodiment adopts a configuration as illustrated in FIG. 14A, an image can be read without the occurrence of a shadow at the leading end of the document as illustrated in FIG. 14B.

As described above, in the present embodiment, the illumination device 13 includes the two light sources (the first light source 1311 and the second light source 1312) to satisfy the above-described conditions (1) and (2). Thus, the illumination device 13 efficiently irradiates the reading target with light having different wavelengths without performing complicated processing on the light guide. In the present embodiment, the pitch interval of the light emitting elements according to the light emission intensity while maintaining the flatness of the illuminance distribution, so that the illuminance in the irradiated region 221 can be enhanced.

### Third Embodiment

In a third embodiment, each of the first light source 1311 and the second light source 1312 includes the light emitting element A and the light emitting element B, which are surface light sources. In the following description of the third embodiment, descriptions that overlap with those in the first embodiment are omitted, and different descriptions from the first embodiment are described.

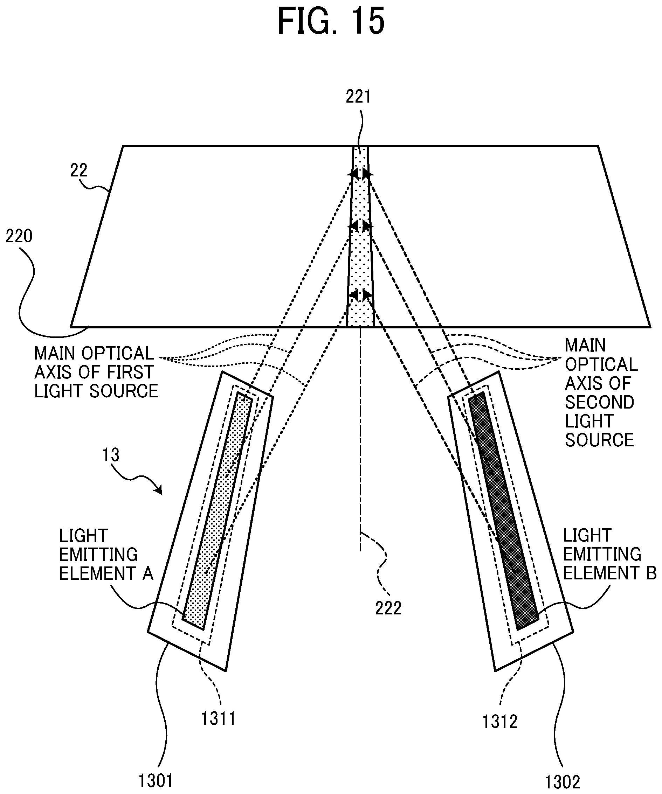

FIG. 15 is a diagram illustrating a configuration of the illumination device 13 according to the present embodiment. As illustrated in FIG. 15, in the present embodiment, a surface light source such as an organic electro luminescence (EL) is used as a light emitting element mounted on each of the light sources (the first light source 1311 and the second light source 1312).

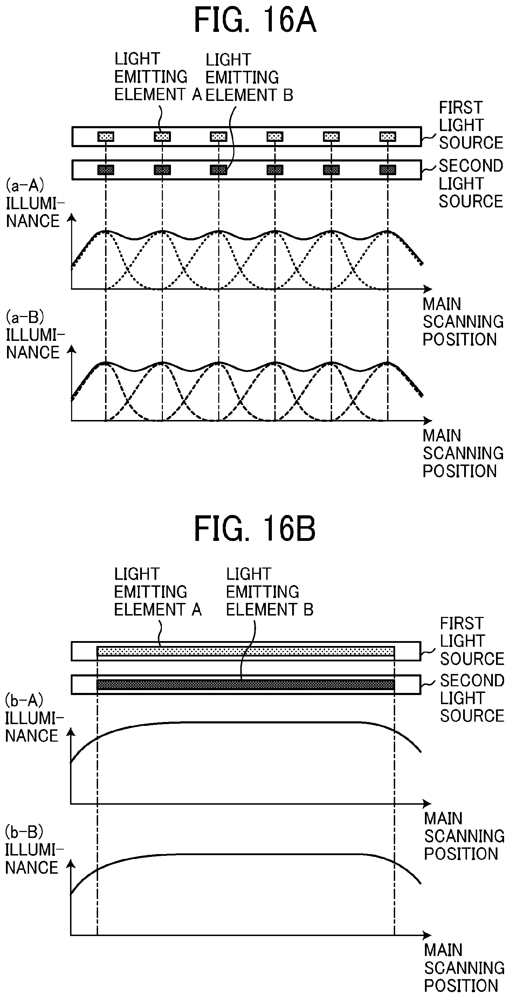

FIGS. 16A and 16B are diagrams illustrating the effect of the configuration of the present embodiment. FIG. 16A illustrates the illuminance distribution (the illuminance at main scanning positions) in the irradiated region 221 in the case where the point light sources are used as the light emitting element A and the light emitting element B as illustrated in FIGS. 11A and 11B and the pitch interval of the light emitting elements is not appropriate. The illuminance of each light emitting element peaks at a position corresponding to the main optical axis of the light emitting element as indicated by the dotted line in the graph (a-A) and the dashed line in the graph (a-B), and decreases as the distance from the position increases. Accordingly, the illuminance distributions of the light emitted from the first light source 1311 and the second light source 1312 are distributions as indicated by solid lines in the graph (a-A) and the (a-B), respectively. The example as illustrated in FIG. 16A has a disadvantage that the flatness of the illuminance distribution is not maintained.

On the other hand, when a surface light source is used as the light emitting element as illustrated in FIG. 15, the illuminance distribution in the irradiated region 221 is flat as illustrated in FIG. 16B. The graph (b-A) illustrates the illuminance distribution of the light emitted from the first light source 1311, and the graph (b-B) illustrates the illuminance distribution of the light emitted from the second light source 1312. When the surface light source is used as illustrated in FIG. 15, an inappropriate pitch interval, which is the factor of the disadvantage of FIG. 16A, does not occur. According to the configuration of FIG. 15, the flatness is maintained as illustrated in FIG. 16B.

As described above, in the present embodiment, the illumination device 13 includes the two light sources (the first light source 1311 and the second light source 1312) to satisfy the above-described conditions (1) and (2). Thus, the illumination device 13 efficiently irradiates the reading target with light having different wavelengths without performing complicated processing on the light guide. In the case of using a point light source, the number of mounted components increases because a plurality of light emitting elements are arranged in an array. In the configuration of the present embodiment, only one light emitting element is mounted on each light source. Thus, the number of mounted components can be reduced, and the number of mounting steps can be reduced.

### Fourth Embodiment

In a fourth embodiment, an image forming apparatus includes an image reading device 30 using the illumination device 13 according to the first embodiment. In the following description of the fourth embodiment, descriptions that overlap with those in the first embodiment are omitted, and different descriptions from the first embodiment are described.

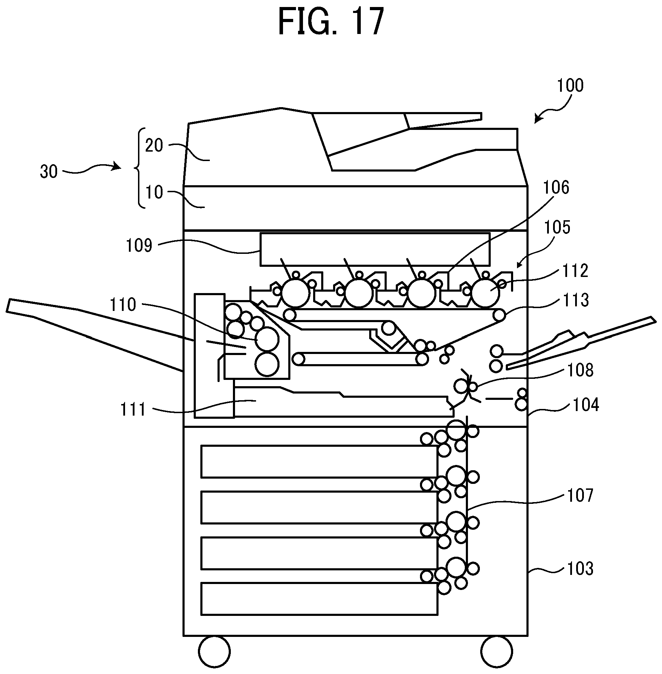

FIG. 17 is a cross-sectional view of an image forming apparatus 100 according to the present embodiment, illustrating a configuration example of a mechanical section. The image forming apparatus 100 (e.g., a digital copier) basically includes an image reading device 30, a sheet feeder 103, and an image forming apparatus body 104. The image reading device 30 includes the reader 10 and the ADF 20, and has the same configuration as that of the first embodiment.

The image forming apparatus body 104 includes a tandem-type image forming device 105, a registration roller pair 108, an optical writing device 109, a fixing-and-conveying device 110, and a double-sided tray 111. The registration roller pair 108 supplies a recording sheet from a sheet feeder 103 to the image forming device 105 via a conveyance passage 107.

The image forming device 105 includes four photoconductor drums 112 corresponding to four colors of yellow (Y), magenta (M), cyan (C), and black (K) arranged in parallel. Image forming elements including a charger, a developing device 106, a transfer device, a cleaner, and a static eliminator are arranged around each of the four photoconductor drums 112. An intermediate transfer belt 113 is disposed between the transfer device and the photoconductor drum 112, and is stretched between a driving roller and a driven roller while being nipped by the transfer device and the photoconductor drum 112.

In the tandem-type image forming apparatus 100 configured as described above, optical writing is performed on the photoconductor drum 112 corresponding to each color for each of the colors of Y, M, C, and K, the developing device 106 develops toner of each of the colors of Y, M, C, and K, and an image is primarily transferred onto the intermediate transfer belt 113 in the order of, for example, Y, M, C, and K. Then, the full-color image formed by superimposing the four-color images by the primary transfer is secondarily transferred onto the recording sheet, is fixed, and is ejected, thereby forming the full-color image on the recording sheet.

As described above, the image forming apparatus 100 according to the present embodiment includes the image reading device 30 described in the first embodiment. Thus, the image reading device 30 can efficiently irradiate the reading target with light having different wavelengths without performing complicated processing on the light guide. Specifically, the image forming apparatus 100 can be provided that includes the image reading device 30 that can read an image with, for example, white light and near-infrared light, has no decrease in illuminance distribution at the ends, has good flatness of illuminance distribution, and has good irradiation efficiency in the irradiated region.

### Fifth Embodiment

**In** a fifth embodiment, the illumination device 13 according to the first embodiment is used in an inspection device. In the following description of the fifth embodiment, descriptions that overlap with those in the first embodiment are omitted, and different descriptions from the first embodiment are described.

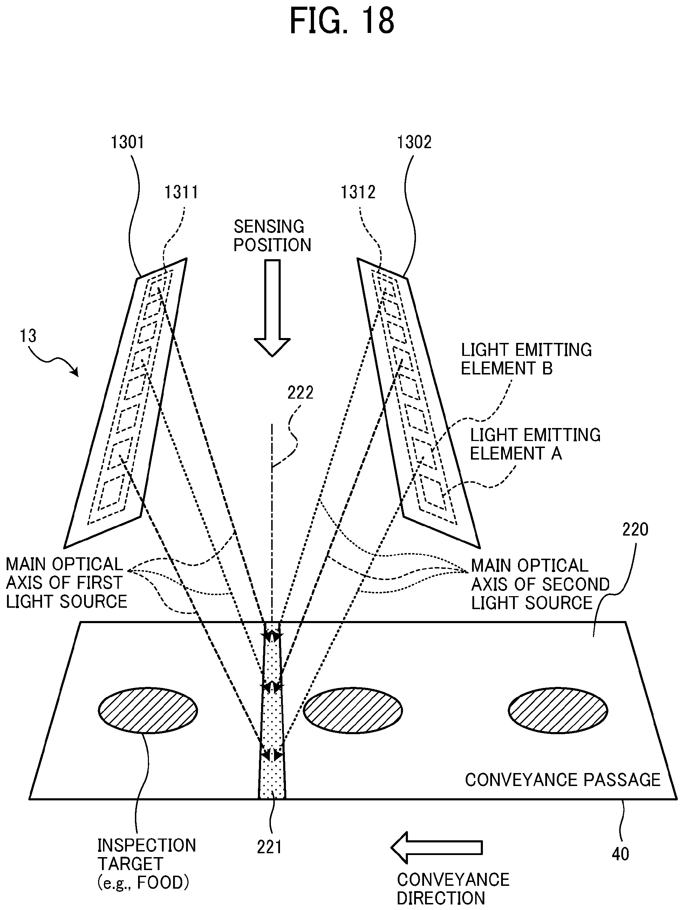

FIG. 18 is a diagram illustrating a configuration of the illumination device 13 included in the inspection device according to the present embodiment. The difference from the first embodiment is that the irradiation target of the illumination device 13 is an inspection target (e.g., food) conveyed by a conveyor 40 such as a belt conveyor disposed below the illumination device 13, and that inspection is performed using reflected light from the inspection target at a sensing position. The sensing position is a position at which the inspection device according to the present embodiment reads reflected light from the inspection target. FIG. 18 is a view of the light source units and the conveyor 40 as viewed obliquely from above. The surface of each light source unit on the back side of the surface on which the light sources are mounted is visible, and the conveyance path on the upper surface of the conveyor 40 is visible. The irradiated surface 220 and the irradiated region 221 are positioned on the upper surface of the conveyor 40.

In a manufacturing factory of, e.g., food, as a pre-shipment inspection, whether food conveyed by a belt conveyor has a foreign substance or a defect may be inspected by utilizing not only visible light but also invisible light. In this way, the illumination device 13 according to the present embodiment can be applied to an inspection process in which inspection is performed using a plurality of types of wavelengths.

In the present embodiment, as illustrated in FIG. 18, the upper surface of the conveyor 40 is set as an irradiated surface 220, and the sensing position of the inspection target is set as an irradiated region 221. In other words, the first light source 1311 and the second light source 1312 of the illumination device 13 are disposed such that the irradiated region 221 irradiated with light by each light source is the sensing position of the inspection target. The arrangement of the light source units (the first light source unit 1301 and the second light source unit 1302) and the arrangement of the light emitting elements (the light emitting element A and the light emitting element B) in the light sources (the first light source 1311 and the second light source 1312) satisfy the conditions (1) and (2) described in the first embodiment.

As described above, according to the present embodiment, the illumination device 13 can be applied to the inspection of food or the like conveyed by the conveyor 40. Thus, the efficiency of irradiation of the inspection target can be enhanced without performing complicated processing on the light guide. Specifically, an inspection device can be provided that includes the illumination device 13 that can read an image with, e.g., white light and near-infrared light, has no decrease in illuminance distribution at the ends, has good flatness of illuminance distribution, and has good irradiation efficiency in the irradiated region.

An illumination device includes a first light source and a second light source. The first light source irradiates an irradiation region with a first light in a first direction. The second light source is disposed opposite to the first light source to irradiate the irradiation region with a second light in a second direction. The first light is overlapped with the second light in the irradiation region. The first light has a wavelength different from the second light. The first light source includes a first light emitting element to emit the first light. The second light source includes a second light emitting element to emit the second light. The first light emitting element is disposed opposite to the second light emitting element across a perpendicular line perpendicular to a plane parallel to an irradiation face having the irradiation region. The first light source includes two types of light emitting elements to emit the first light and the second light. The two types of light emitting elements are alternately arrayed in a first order in the first light source. The second light source includes the two types of light emitting elements alternately arrayed in a second order reversed to the first order in the second light source. Each of the first light source and the second light source includes the two types of light emitting elements identical to each of the first light source and the second light source. The two types of light emitting elements in the first light source is arrayed in a opposite direction to the two types of light emitting elements in the second light source. The first light source includes first multiple light emitting elements arrayed in a longitudinal direction of the first light source. Each of the first multiple light emitting elements emits the first light having a first wavelength. The second light source includes second multiple light emitting elements arrayed in a longitudinal direction of the second light source. Each of the second multiple light emitting elements emits the second light having a second wavelength. Each of the first light emitting element and the second light emitting element includes a surface emitting light source. The first light source includes a white light source to emit white light as the first light. The second light source includes a near-infrared light source to emit near-infrared light as the second light.

An image reading device includes the illumination device, a conveyor, and a sensor. The conveyor conveys a document in a conveyance direction. The sensor reads reflected light of the first light and the second light emitted from the first light source and the second light source, respectively, and reflected from the irradiation region. The first light source includes a white light source to emit white light as the first light and is disposed on an upstream side or a downstream side of the second light source in the conveyance direction.

An image forming apparatus includes the image reading device.

An inspection device includes the illumination device and a conveyor. The conveyor conveys an inspection target. The first light source and the second light source irradiate the inspection target conveyed by the conveyor with the first light and the second light, respectively, at the irradiation region.

An illumination method includes irradiating an irradiation region with a first light in a first direction by a first light source and irradiating the irradiation region with a second light in a second direction by a second light source. The first light is overlapped with the second light in the irradiation region. The first light has a wavelength different from the second light.

Although some embodiments of the present disclosure have been described above, the above-described embodiments are presented as examples and are not intended to limit the scope of the present disclosure. The above-described novel embodiments can be implemented in other various forms, and various omissions, replacements, and changes can be made without departing from the scope of the present disclosure. Such novel embodiments and variations thereof are included in the scope and gist of the present disclosure and are included in the scope of the appended claims and the equivalent scope thereof. Further, elements according to varying embodiments or modifications may be combined as appropriate.

A description is given below of some aspects according to the present disclosure.

### First Aspect

An illumination device (e.g., the illumination device 13) includes a first light source (e.g., the first light source 1311) and a second light source (e.g., the second light source 1312). The first light source irradiates an irradiated region (e.g., the irradiated region 221) with light. The second light source is opposed to the first light source and irradiates the irradiated region with light. The irradiated region has a region where the light irradiated by the first light source in a main-optical-axis direction and light irradiated by the second light source in a main-optical-axis direction overlap with each other. The light irradiated by the first light source and the light irradiated by the second light source have different wavelengths.

### Second Aspect

**In** the illumination device (e.g., the illumination device 13) according to the first aspect, the first light source (e.g., the first light source 1311) includes a first light emitting element (e.g., the light emitting element A) and the second light source (e.g., the second light source 1312) includes a second light emitting element (e.g., the light emitting element B) adjacent to the first light emitting element. The first light emitting element and the second light emitting element are disposed at positions opposed to each other with a perpendicular line (e.g., the perpendicular line 222) interposed between the first light emitting element and the second light emitting element. The perpendicular line is perpendicular to a surface parallel to an irradiated surface (e.g., the irradiated surface 220) of the irradiated region (e.g., the irradiated region 221).

### Third Aspect

**In** the illumination device (e.g., the illumination device 13) according to the first or second aspect, two types of light emitting elements (e.g., the light emitting element A, the light emitting element B) that emit light having wavelengths different from each other are alternately arranged in an array in the first light source (e.g., the first light source 1311), and the two types of light emitting elements are alternately arranged in an array in the second light source (e.g., the second light source 1312).

### Fourth Aspect

In the illumination device (e.g., the illumination device 13) according to the third aspect, a common light source is used for the first light source (e.g., the first light source 1311) and the second light source (e.g., the second light source 1312), and an arrangement of the common light source in the second light source is obtained by rotating an arrangement of the common light source in the first light source by 180 degrees.

### Fifth Aspect

In the illumination device (e.g., the illumination device 13) according to the first or second aspect, the first light source (e.g., the first light source 1311) includes only one of two types of light emitting elements (e.g., the light emitting element A, the light emitting element B) that emit light having wavelengths different from each other, and the second light source (e.g., the second light source 1312) includes only the other of the two types of light emitting elements.

### Sixth Aspect

In the illumination device (e.g., the illumination device 13) according to the fifth aspect, the light emitting element (e.g., the light emitting element A, the light emitting element B) is a surface light source.

### Seventh Aspect

In the illumination device (e.g., the illumination device 13) according to any one of the first to sixth aspects, one of the light emitted from the first light source (e.g., the first light source 1311) and the second light source (e.g., the second light source 1312) from positions opposed to each other with a perpendicular line to a surface parallel to the irradiated surface (e.g., the irradiated surface 220) of the irradiated region (e.g., the irradiated region 221) interposed between the first light source and the second light source is light emitted from a white light source, and the other is light emitted from a near-infrared light source.

### Eighth Aspect

An image reading device (e.g., the image reading device 30) includes the illumination device (e.g., the illumination device 13) according to any one of the first to seventh aspects and a sensor that reads reflected light reflected from the irradiated region (e.g., the irradiated region 221) after the first light source (e.g., the first light source 1311) and the second light source (e.g., the second light source 1312) of the illumination device emit light to the irradiated region.

### Ninth Aspect

An image reading device (e.g., the image reading device 30) includes the illumination device (e.g., the illumination device 13) according to the fifth aspect and a sensor that reads reflected light reflected from the irradiated region (e.g., the irradiated region 221) after the first light source (e.g., the first light source 1311) and the second light source (e.g., the second light source 1312) of the illumination device emit light to the irradiated region. One of the first light source and the second light source is disposed on an upstream side in a conveying direction of a sheet-through document. A light emitting element of the light source disposed on the upstream side is a white light source.

### Tenth Aspect

An image reading device (e.g., the image reading device 30) includes the illumination device (e.g., the illumination device 13) according to the fifth aspect and a sensor that reads reflected light reflected from the irradiated region (e.g., the irradiated region 221) after the first light source (e.g., the first light source 1311) and the second light source (e.g., the second light source 1312) of the illumination device emit light to the irradiated region. One of the first light source and the second light source is disposed on a downstream side in a conveying direction of a sheet-through document. A light emitting element of the light source disposed on the downstream side is a white light source.

### Eleventh Aspect

An image forming apparatus (e.g., the image forming apparatus 100) includes the image reading device (e.g., the image reading device 30) according to the eighth aspect.

### Twelfth aspect

An inspection device includes the illumination device (e.g., the illumination device 13) according to any one of the first to seventh aspect and a conveyor (e.g., the conveyor 40) that conveys an inspection target. The first light source (e.g., the first light source 1311) and the second light source (e.g., the second light source 1312) of the illumination device are disposed such that the irradiated region (e.g., the irradiated region 221) is a sensing position of the inspection target conveyed by the conveyor.

### Thirteenth aspect

An illumination method for an illumination device (e.g., the illumination device 13) including a first light source (e.g., the first light source 1311) that irradiates an irradiated region (e.g., the irradiated region 221) with light and a second light source (e.g., the second light source 1312) opposed to the first light source to irradiate the irradiated region with light. The irradiated region has a region where light irradiated by the first light source in a main optical axis direction and light irradiated by the second light source in a main optical axis direction overlap with each other. The light irradiated by the first light source and the light irradiated by the second light source have different wavelengths.

## Claims

1. An illumination device (13) comprising:
a first light source (1311) to irradiate an irradiation region (221) with a first light in a first direction; and
a second light source (1312) disposed opposite to the first light source (1311) to irradiate the irradiation region (221) with a second light in a second direction,
wherein the first light is overlapped with the second light in the irradiation region (221), and
the first light has a wavelength different from the second light.

2. The illumination device (13) according to claim 1,
wherein the first light source (1311) includes a first light emitting element (A) to emit the first light,
the second light source (1312) includes a second light emitting element (B) to emit the second light, and
the first light emitting element (A) is disposed opposite to the second light emitting element (B) across a perpendicular line (222) perpendicular to a plane parallel to an irradiation face (220) having the irradiation region (221).

3. The illumination device (13) according to claim 1 or 2,
wherein the first light source (1311) includes two types of light emitting elements (A, B) to emit the first light and the second light,
the two types of light emitting elements (A, B) are alternately arrayed in a first order in the first light source (1311), and
the second light source (1312) includes the two types of light emitting elements (A, B) alternately arrayed in a second order reversed to the first order in the second light source (1312).

4. The illumination device (13) according to claim 3,
wherein each of the first light source (1311) and the second light source (1312) includes the two types of light emitting elements (A, B) identical to each of the first light source (1311) and the second light source (1312), and
the two types of light emitting elements (A, B) in the first light source (1311) is arrayed in an opposite direction to the two types of light emitting elements (A, B) in the second light source (1312).

5. The illumination device (13) according to claim 1 or 2,
wherein the first light source (1311) includes first multiple light emitting elements (A, B), arrayed in a longitudinal direction of the first light source (1311),
each of the first multiple light emitting elements (A, B) emits the first light having a first wavelength,
the second light source (1312) includes second multiple light emitting elements (A, B), arrayed in a longitudinal direction of the second light source (1312), and
each of the second multiple light emitting elements (A, B) emits the second light having a second wavelength.

6. The illumination device (13) according to claim 2,
wherein each of the first light emitting element (A) and the second light emitting element (B) includes a surface emitting light source.

7. The illumination device (13) according to any one of claims 1 to 6,
wherein the first light source (1311) includes a white light source to emit white light as the first light, and
the second light source (1312) includes a near-infrared light source to emit near-infrared light as the second light.

8. An image reading device (30) comprising:
the illumination device (13) according to any one of claims 1 to 7; and
a sensor to read reflected light of the first light and the second light emitted from the first light source (1311) and the second light source (1312), respectively, and reflected from the irradiation region (221).

9. An image reading device (30) comprising:
the illumination device (13) according to claim 5;
a conveyor (40) to convey a document in a conveyance direction; and
a sensor to read reflected light of the first light and the second light emitted from the first light source (1311) and the second light source (1312), respectively, and reflected from the document at the irradiation region (221),
wherein the first light source (1311) includes a white light source to emit white light as the first light, and
the first light source (1311) is disposed on an upstream side of the second light source (1312) in the conveyance direction.

10. An image reading device (30) comprising:
the illumination device (13) according to claim 5;
a conveyor (40) to convey a document in a conveyance direction; and
a sensor to read reflected light of the first light and the second light emitted from the first light source (1311) and the second light source (1312), respectively, and reflected from the document at the irradiation region (221),
wherein the first light source (1311) includes a white light source to emit white light as the first light, and
the first light source (1311) is disposed on a downstream side of the second light source (1312) in the conveyance direction.

11. An image forming apparatus (100) comprising the image reading device (30) according to claim 8.

12. An inspection device comprising:
the illumination device (13) according to any one of claims 1 to 7; and
a conveyor (40) to convey an inspection target,
wherein the first light source (1311) and the second light source (1312) irradiate the inspection target conveyed by the conveyor (40) with the first light and the second light, respectively, at the irradiation region (221).

13. An illumination method comprising:
irradiating an irradiation region (221) with a first light in a first direction by a first light source (1311); and
irradiating the irradiation region (221) with a second light in a second direction by a second light source (1312),
wherein the first light is overlapped with the second light in the irradiation region (221), and
the first light has a wavelength different from the second light.
